# EUROPÄISCHE PATENTSCHRIFT

(11) **EP 0 496 004 B1**
(45) Veröffentlichungstag und Bekanntmachung des Hinweises auf die Patenterteilung: **06.11.1996**
(21) Anmeldenummer: 91100390.3
(22) Anmeldetag: 15.01.1991
(51) Int. Cl.: G05B 19/18

(54) **Verfahren zur hochgenauen Fertigbearbeitung von vorprofilierten, gehärteten Werkstücken**
Method for high-precision machining of pre-profiled, hardened workpieces
Méthode pour l'usinage à haute précision de pièces pré-profilées, durcies

(43) Veröffentlichungstag der Anmeldung: 29.07.1992
(73) Patentinhaber: Kapp GmbH & Co. KG Werkzeugmaschinenfabrik, D-96450 Coburg (DE)
(72) Erfinder: Lorenz, Manfred, Dipl.-Ing. FH, W-8630 Coburg (DE); Beckering, Hermann, Dipl.-Ing., W-8631 Ahorn (DE)
(74) Vertreter: Stenger, Watzke & Ring Patentanwälte

(56) Entgegenhaltungen:
- EP-A- 0 065 247
- EP-A- 0 199 961

## Beschreibung

Die Erfindung betrifft ein Verfahren zur hochgenauen Fertigbearbeitung von vorprofilierten gehärteten Werkstücken, vorzugsweise Verzahnungen, auf einer mit einem Tastorgan zur Vermessung ausgestatteten Werkzeugmaschine mittels eines Werkzeuges, vorzugsweise eines Schleifwerkzeuges, wobei die Messung und Bearbeitung in einer einzigen Einspannung erfolgen.

Aus EP-A2-0 199 961 und EP-A1-0 065 247 sind Fertigbearbeitungsverfahren bekannt, bei denen zur Erzielung einer vorgegebenen Form- und Lagegenauigkeit folgende Verfahrensschritte durchgeführt werden:
a) Messen der geometrischen Lage zumindest einiger, für das jeweilige Werkstück charakteristischer Stellen der zu bearbeitenden Flächen des vorprofilierten Werkstücks (bei Zahnrädern zum Beispiel die Lage der Zahnflanken an einer oder mehreren Stellen über der Zahnbreite) relativ zum Werkzeug und Abspeichern der gemessenen Werte;
b) Durchführen der Bearbeitung durch Materialabtrag an allen zu bearbeitenden Flächen;
c) Vermessen des fertigbearbeiteten Werkstückes zumindest an den im ersten Verfahrensschritt gemessenen Stellen und Abspeichern dieser Werte;
d) Vergleichen der vor und nach der Bearbeitung gemessenen Werte und Berechnung des effektiven Materialabtrags zumindest an den gemessenen Stellen.

Das Messen erfolgt allerdings auf einer separaten Meßmaschine, weshalb die Werkstücke umgespannt werden müssen.

Speziell im Flugzeugbau werden profilierte Bauteile, wie Verzahnungen, verwendet, bei denen es nicht nur auf die exakte Profilform des fertigen Bauteils ankommt, sondern auch darauf, daß die Bauteile zumindest an den tragenden Stellen eine gleichmäßige Härteschicht aufweisen. Bei der Herstellung derartiger Bauteile auf einer Werkzeugmaschine muß deshalb darauf geachtet werden, daß mit dem durch ein Werkzeug, vorzugsweise ein Schleifwerkzeug, vorgenommenen Materialabtrag von einem weniger genau vorprofilierten, gehärteten Werkstück einerseits eine exakte Profilform am fertigen Werkstück erzielt wird, andererseits aber sichergestellt wird, daß an den bearbeiteten Flächen trotz des Materialabtrags eine Härteschicht mit vorgegebener Mindesttiefe erhalten bleibt. Hierbei wird davon ausgegangen, daß die vorprofilierten Werkstücke, die vor ihrer abschließenden Bearbeitung gehärtet worden sind, eine gleichmäßige Härtetiefe bestimmter Stärke haben, die sich aus dem jeweiligen Härteprozeß ergibt.

Das Verfahren der Erfindung, mit dem außer einer exakten Profilform eine Mindesttiefe der Härteschicht an den bearbeiteten Flächen sichergestellt werden soll, ist dadurch gekennzeichnet, daß der Materialabtrag unter Aufrechterhaltung einer Härteschicht mit vorgegebener Mindesttiefe erfolgt und für jedes Werkstück dokumentiert wird.

Durch die mit dem erfindungsgemäßen Verfahren erstellte Dokumentation des Materialabtrags zumindest an einigen, für das jeweilige Werkstück charakteristischen Stellen der zu bearbeitenden Flächen wird sichergestellt, daß solche Werkstücke als Ausschuß ausgeschieden werden, die zwar eine exakte Profilform haben, bei denen jedoch zumindest an einer bearbeiteten Fläche ein derart starker Materialabtrag stattgefunden hat, daß das Vorliegen einer Mindesttiefe der Härteschicht nicht mehr garantiert werden kann. Anhand der Dokumentation kann auch Ausschuß festgestellt werden, der dadurch zustande kommt, daß eine oder mehrere zu bearbeitende Stellen des Werkstückes durch zu geringes Aufmaß nicht sauber bearbeitet worden sind ("Luftschleifen"). In einer einzigen Aufspannung des Werkstückes auf der mit dem Werkzeug und einem Tastorgang ausgerüsteten Werkzeugmaschine wird mit dem erfindungsgemäßen Verfahren somit nicht nur eine hochgenaue Fertigbearbeitung durchgeführt, sondern auch innerhalb kürzester Zeit eine auf exakten Messungen beruhende Ermittlung des effektiven Abschliffbetrages des fertigen Werkstückes, die das Vorhandensein einer vorgegebenen Mindesttiefe der Härteschicht umfaßt. Die Dokumentation des Materialabtrags an den bearbeiteten Flächen kann hierbei nicht nur dazu benutzt werden, Werkstücke mit ungenügender Schichttiefe der Härteschicht an zumindest einer bearbeiteten Fläche auszuscheiden, sondern auch als Nachweis dafür, daß bei den als gut befundenen Werkstücken außer der geforderten Formgenauigkeit an allen bearbeiteten Flächen eine ausreichend große Schichtstärke der Härteschicht vorhanden ist. In Abhängigkeit vom Vorhandensein der Hard- und Software an der Werkzeugmaschine kann die Dokumentation aus Zahlentabellen und/oder Grafiken bestehen.

Um von einer aufwendigen Bearbeitung eines vorprofilierten Werkstückes Abstand zu nehmen, wenn bereits nach der ersten Vermessung feststeht, daß die Bearbeitung zumindest an einer zu bearbeitenden Fläche einen Abtrag erfordert, durch den die Mindesttiefe der Härteschicht unterschritten würde, wird gemäß einem weiteren Merkmal der Erfindung das erfindungsgemäße Verfahren durch folgende zusätzliche Verfahrensschritte ergänzt:
a) Vor der Bearbeitung des Werkstückes durch Materialabtrag wird eine Simulationsrechnung durchgeführt, die ausgehend von der bei der Vermessung des vorprofilierten Werkstückes festgestellten relativen Position des Werkstücks zum Werkzeug vor der Bearbeitung die Profillagen berechnet, die sich nach Durchführen der Bearbeitung ergeben würden;
b) Vergleich der durch Simulationsrechnung ermittelten Werte mit den durch Vermessung des vorprofilierten Werkstücks ermittelten Werte und Berechnung der sich durch die durchzuführende Bearbeitung ergebenden Werte für den Materialabtrag;
c) Aussondern des Werkstückes, sofern sich mindestens an einer der zu bearbeitenden Flächen ein unzulässig hoher oder ein zu geringer Materialabtrag ergeben würde, bzw. Durchführen der Verfahrensschritte b,c,d und e nach Anspruch 1.

Mit dieser erfindungsgemäßen Weiterentwicklung wird schon vor dem eigentlichen Bearbeitungsvorgang festgestellt, ob aus dem vorprofilierten, vermessenen Werkstück ein Gutteil erzeugt werden kann. Sollte dies beispielsweise durch einen beim Härten nicht zu vermeidenden Verzug ausgeschlossen sein, erfolgt eine Aussonderung dieses Werkstückes, wodurch Bearbeitungszeit sowie Maschinen- und Werkzeugkosten eingespart werden.

Mit der Erfindung wird schließlich vorgeschlagen, die geometrische Lage aller zu bearbeitenden Flächen des jeweiligen vorprofilierten Werkstückes relativ zum Werkzeug zu messen und das Werkstück aufgrund einer Auswertung der Meßwerte derart relativ zum Werkzeug auszurichten, daß die maximale Abweichung der festgestellten geometrischen Ist-Lage von der Soll-Lage minimiert wird (Aufmaßverteilung), wobei sichergestellt wird, daß an der Stelle mit der geringsten Abweichung der Ist-Lage von der Soll-Lage ein minimaler Abtrag stattfindet.

Mit einer derartigen Integration der an sich bekannten Aufmaßverteilung (stock dividing) in das erfindungsgemäße Verfahren kann nicht nur der Bearbeitungsaufwand durch Materialabtrag minimiert werden, es besteht mitunter auch die Möglichkeit, durch die hiermit verbundene Veränderung der theoretischen Null-Lage des Werkstückes den Abtrag an der hinsichtlich der Resttiefe der Härteschicht kritischen Fläche derart zu verringern, daß aus einem Ausschußteil ein Gutteil wird. Da an der Werkzeugmaschine ein Tast-Organ mit der notwendigen Hard- und Software vorhanden ist, genügt ggf. eine geringfügige Aufwertung der Software, um das voranstehend geschilderte Verfahren der Aufmaßverteilung durchzuführen und die hiermit verbundenen Vorteile einer Minimierung der Abtragleistung und Bearbeitungszeit sowie des Ausschusses zu erreichen.

Insgesamt wird mit der Erfindung ein Verfahren zur Dokumentation des Materialabtrags bei der hochgenauen Fertigbearbeitung von hochpräzisen und hochbelasteten Werkstücken, insbesondere für den Flugzeugbau geschaffen, das sicherstellt, daß das Werkstück an allen tragenden Stellen eine Härteschicht mit vorgegebener Mindestschichttiefe aufweist.

## Patentansprüche

1. Verfahren zur hochgenauen Fertigbearbeitung von vorprofilierten, gehärteten Werkstücken, vorzugsweise Verzahnungen, auf einer mit einem Tastorgan zur Vermessung ausgestatteten Werkzeugmaschine mittels eines Werkzeugs, vorzugsweise eines Schleifwerkzeugs, wobei die Messung und Bearbeitung in einer einzigen Einspannung durch folgende Verfahrensschritte erfolgen:
a) Messen der geometrischen Lage zumindest einiger, für das jeweilige Werkstück charakteristischer Stellen der zu bearbeitenden Flächen des vorprofilierten Werkstückes relativ zum Werkzeug und Abspeichern der gemessenen Werte;
b) Durchführen der Bearbeitung durch Materialabtrag an allen zu bearbeitenden Flächen;
c) Vermessen des fertigbearbeiteten Werkstücks zumindest an den im ersten Verfahrensschritt gemessenen Stellen und Abspeichern dieser Werte;
d) Vergleichen der vor und nach der Bearbeitung gemessenen Werte und Berechnung des effektiven Materialabtrages zumindest an den gemessenen Stellen;
**dadurch gekennzeichnet**,
daß der Materialabtrag unter Aufrechterhaltung einer Härteschicht mit vorgegebener Mindesttiefe erfolgt und für jedes Werkstück dokumentiert wird.

2. Verfahren nach Anspruch 1, gekennzeichnet durch folgende zusätzliche Verfahrensschritte:
a) Vor der Bearbeitung des Werkstückes durch Materialabtrag wird eine Simulationsrechnung durchgeführt, die ausgehend von der bei der Vermessung des vorprofilierten Werkstückes festgestellten relativen Position des Werkstücks zum Werkzeug vor der Bearbeitung die Profillagen berechnet, die sich nach Durchführen der Bearbeitung ergeben würden;
b) Vergleich der durch Simulationsrechnung ermittelten Werte mit den durch Vermessung des vorprofilierten Werkstücks ermittelten Werten und Berechnung der sich durch die durchzuführende Bearbeitung ergebenden Werte für den Materialabtrag;
c) Aussondern des Werkstückes, sofern sich mindestens an einer der zu bearbeitenden Flächen ein unzulässig hoher oder ein zu geringer Materialabtrag ergeben würde, bzw. Durchführen der Verfahrensschritte b,c,d und e nach Anspruch 1.

3. Verfahren nach Anspruch 1 oder 2, dadurch gekennzeichnet, daß vor Beginn der Verfahrensschritte nach Anspruch 1 oder 2 die geometrische Lage aller zu bearbeitenden Flächen des jeweiligen vorprofilierten Werkstücks relativ zum Werkzeug gemessen und das Werkstück aufgrund einer Auswertung der Meßwerte derart relativ zum Werkzeug ausgerichtet wird, daß die maximale Abweichung der festgestellten geometrischen Ist-Lage von der Soll-Lage minimiert wird (Aufmaßverteilung).

## Claims

1. Method for high-precision finish machining of pre-profiled, hardened workpieces, preferably gear-tooth systems, on a machine tool, equipped with a sensing member for measuring, by means of a tool, preferably a grinding tool, the measuring and machining being effected in a single set-up by the following steps of the method:
a) measuring the geometric position of at least some points, characteristic of the respective workpiece, of the surfaces to be machined of the pre-profiled workpiece relative to the tool and storing the measured values;
b) carrying out the machining by stock removal on all surfaces to be machined;
c) measuring the finish-machined workpiece at least at the points measured in the first step of the method and storing these values;
d) comparing the values measured before and after the machining and calculating the effective stock removal at least at the measured points;
characterized in that the stock removal is effected while maintaining a hardness layer of predetermined minimum depth and is documented for each workpiece.

2. Method according to Claim 1, characterized by the following additional steps:
a) before the machining of the workpiece by stock removal, a simulation calculation is made which, starting from the position of the workpiece relative to the tool before the machining, which position is established during the measuring of the pre-profiled workpiece, calculates the profile positions which would result after the machining is carried out;
b) comparing the values determined by simulation calculation with the values determined by measuring the pre-profiled workpiece and calculating the values, resulting from the machining to be carried out, for the stock removal;
c) rejecting the workpiece if an inadmissably high amount of the stock removal or too little stock removal would result at least on one of the surfaces to be machined, or carrying out the steps of the method b, c, d and e according to Claim 1.

3. Method according to Claim 1 or 2, characterized in that, before the start of the steps of the method according to Claim 1 or 2, the geometric position of all surfaces to be machined of the respective pre-profiled workpiece relative to the tool is measured and the workpiece, on the basis of an analysis of the measured values, is oriented relative to the tool in such a way that the maximum deviation of the established actual geometric position from the desired position is minimized (stock dividing).

## Revendications

1. Procédé pour le finissage à haute précision de pièces préprofilées durcies, de préférence de dentures, sur une machine-outil équipée d'un organe palpeur de contrôle dimensionnel, au moyen d'un outil, de préférence d'un outil de rectification, la mesure et l'usinage s'effectuant avec un seul montage selon les étapes suivantes :
a) Mesure de la position géométrique d'au moins certains points caractéristiques de la pièce donnée et des surfaces à usiner de la pièce préprofilée par rapport à l'outil, et mémorisation des valeurs mesurées ;
b) Réalisation de l'usinage par enlèvement de matière sur toutes les surfaces à usiner ;
c) Contrôle dimensionnel de la pièce finie, au moins au niveau des points mesurés lors de la première étape, et mémorisation de ces valeurs ;
d) Comparaison des valeurs mesurées avant et après usinage, et calcul de l'enlèvement réel de matière au moins au niveau des points mesurés ;
caractérisé en ce que
l'enlèvement de matière est effectué en conservant une couche durcie d'épaisseur minimale prédéfinie et est enregistré pour chaque pièce.

2. Procédé selon la revendication 1, caractérisé par les étapes suivantes :
a) Avant l'usinage de la pièce par enlèvement de matière, on procède à un calcul de simulation qui, à partir de la position relative occupée par la pièce par rapport à l'outil avant l'usinage et constatée lors du contrôle dimensionnel de la pièce préprofilée, établit les profils qui seraient obtenus après réalisation de l'usinage ;
b) Comparaison des valeurs déterminées par le calcul de simulation et des valeurs obtenues lors du contrôle dimensionnel de la pièce préprofilée, et calcul des valeurs d'enlèvement de matière correspondant à l'usinage à réaliser ;
c) Élimination de la pièce dans l'hypothèse d'un enlèvement de matière trop élevé ou trop faible au moins sur une des surfaces à usiner ou, selon le cas, réalisation des étapes b, c, d et e de la revendication 1.

3. Procédé selon la revendication 1 ou 2, caractérisé en ce que, avant le début des étapes de la revendication 1 ou 2, la position géométrique de toutes les surfaces à usiner de la pièce préprofilée par rapport à l'outil est mesurée et, sur la base d'une analyse des valeurs mesurées, la pièce est orientée par rapport à l'outil de façon à réduire le plus possible l'écart maximal entre la position géométrique réelle constatée et la position de consigne (répartition de la surépaisseur).
